# EUROPÄISCHE PATENTSCHRIFT

(11) **EP 2 457 024 B1**
(45) Veröffentlichungstag und Bekanntmachung des Hinweises auf die Patenterteilung: **07.10.2015**
(21) Anmeldenummer: 10737013.2
(22) Anmeldetag: 15.07.2010
(51) Int. Cl.: F23N 1/00

(54) **SCHALTUNG EINER GASVENTILEINHEIT**
SWITCH OF A GAS VALVE UNIT
DISPOSITIF DE COMMUTATION D'UNE UNITÉ DE VANNES À GAZ

(30) Priorität: 24.07.2009 EP 09290589; 08.03.2010 EP 10290115
(43) Veröffentlichungstag der Anmeldung: 30.05.2012
(73) Patentinhaber: BSH Hausgeräte GmbH, 81739 München (DE)
(72) Erfinder: NAUMANN, Jörn, 77770 Durbach (DE); CADEAU, Christophe, 67100 Strasbourg (FR); CLAUSS, Stéphane, F-67140 Stotzheim (FR); EISENBERG, Alexander, F-67150 Erstein (FR)
(86) Internationale Anmeldenummer: PCT/EP2010/060173
(87) Internationale Veröffentlichungsnummer: WO 2011/009792

(56) Entgegenhaltungen:
- EP-A1- 0 884 530
- DE-A1- 10 249 938
- US-A- 2 601 321
- US-A- 2 639 727

## Beschreibung

Die Erfindung betrifft eine Gasventileinheit zum Einstellen eines einem Gasbrenner eines Gasgeräts, insbesondere eines Gaskochgerätes zugeführten Gasvolumenstroms, wobei die Gasventileinheit einen Gaseingang, mindestens zwei Auf-Zu-Ventile, mindestens zwei Drosselstellen sowie einen Gasausgang aufweist.

Gasventileinheiten der genannten Art sind beispielsweise in den Druckschriften EP0818655A2 und WO2004063629A1 beschrieben. Mit derartigen Gasventileinheiten kann der einem Gasbrenner eines Gasgeräts zugeführte Gasvolumenstrom in mehreren Stufen gesteuert werden. Dabei besitzt der Gasvolumenstrom in jeder Stufe eine reproduzierbare Größe. Der effektive Durchflussquerschnitt der Gasventileinheit insgesamt - und damit die Größe des Gasvolumenstroms - wird eingestellt, indem bestimmte Auf-Zu-Ventile der Gasventileinheit geöffnet bzw. geschlossen werden und dadurch der Gasfluss durch bestimmte Drosselöffnungen freigegeben bzw. unterbrochen wird.

Bei den bekannten Gasventileinheiten gemäß EP0818655A2 und WO2004063629A1 zweigen nach dem Gaseingang mehrere parallele Teilgasleitungen ab, die jeweils ein Auf-Zu-Ventil und eine Drosselstelle aufweisen. Alle Teilgasleitungen münden in einen gemeinsamen Gasausgang. In einer anderen Ausführungsform der EP0818655A2 sind mehrere Drosselstellen in Reihe geschaltet und jeweils mit einem Bypass versehen. Zusätzlich ist in jedem Bypass ein Auf-Zu-Ventil angeordnet. Die bekannten Ausführungsformen dienen dazu, den Durchflussquerschnitt der gesamten Gasventileinheit in mehreren Stufen einzustellen, indem die Auf-Zu-Ventile einzeln und unabhängig voneinander geöffnet und geschlossen werden. Hierbei sind Schaltvorgänge vorgesehen, bei denen ein Auf-Zu-Ventil geöffnet und exakt gleichzeitig ein anderes Auf-Zu-Ventil geschlossen werden muss. Derartige Schaltvorgänge führen im praktischen Betrieb dazu, dass sich der Gasvolumenstrom kurzzeitig auf einen unerwünschten Wert verringert oder erhöht und sich damit die Flamme am Gasbrenner kurzzeitig verkleinert oder vergrößert.

Weitere bekannte Gasventileinheiten sind in den Dokumenten US2601321A, US2639727A und DE10249938A1 beschrieben.

Der vorliegenden Erfindung liegt die Aufgabe zugrunde, eine gattungsgemäße Gasventileinheit mit einem verbesserten Schaltverhalten zur Verfügung zu stellen.

Diese Aufgabe wird erfindungsgemäß dadurch gelöst, dass die Gasventileinheit eine Drosselstrecke umfasst, in der die Drosselstellen in Reihe angeordnet sind und die jeweils zwischen zwei benachbarten Drosselstellen einen Verbindungsabschnitt aufweist, und dass mindestens zwei Auf-Zu-Ventile eingangsseitig mit dem Gaseingang verbunden sind und mindestens ein Auf-Zu-Ventil ausgangsseitig in einen Verbindungsabschnitt der Drosselstrecke mündet. Die Drosselstrecke umfasst definitionsgemäß mehrere Drosselstellen, die in Reihe geschaltet sind und mit Verbindungsabschnitten miteinander verbunden sind. In jeden Verbindungsabschnitt mündet ein Auf-Zu-Ventil, das eingangsseitig mit dem Gaseingang der Gasventileinheit verbunden ist. Durch Öffnen eines Auf-Zu-Ventils werden alle Drosselstellen, die in der Reihenschaltung der Drosselstellen vor dem Verbindungsabschnitt liegen, in die das Auf-Zu-Ventil mündet, überbrückt. Auf dem Weg zum Gasausgang der Gasventileinheit durchströmt der Gasstrom dann nur noch diejenigen Drosselstellen, die hinter dem Verbindungsabschnitt, in die das Auf-Zu-Ventil mündet, angeordnet sind. Zum Einstellen des Gasvolumenstroms werden die Drosselstellen der Reihe nach überbrückt, indem jeweils zumindest ein Auf-Zu-Ventil geöffnet wird. Hierbei ist es nicht erforderlich, gleichzeitig ein Auf-Zu-Ventil zu öffnen und ein anderes zu schließen. Unerwünschte Umschaltsprünge des Gasvolumenstroms können so sicher vermieden werden.

Dabei weist die Drosselstrecke mehrere, vorzugsweise mindestens vier Drosselstellen auf, weist die Drosselstrecke jeweils zwischen zwei benachbarten Drosselstellen einen Verbindungsabschnitt auf und mündet in jeden der Verbindungsabschnitt ein Auf-Zu-Ventil. Die Anzahl der Drosselstellen und Auf-Zu-Ventile entspricht genau der Anzahl der Schaltstufen für den Gasvolumenstrom zum Gasbrenner. Je mehr Auf-Zu-Ventile und Drosselstellen vorgesehen sind, desto feiner lässt sich der Gasvolumenstrom und damit die Brennleistung des Gasbrenners einstellen.

Weiter weist die Drosselstrecke vor der -in Gasströmungsrichtung betrachtet- ersten Drosselstelle einen Eingangsabschnitt auf, und ist ein Auf-Zu-Ventil eingangsseitig mit dem Gaseingang verbunden und mündet ausgangsseitig in den Eingangsabschnitt der Drosselstrecke. Als Eingangsabschnitt wird der Leitungsabschnitt der Drosselstrecke vor der ersten Drosselstelle bezeichnet. Neben den Verbindungsabschnitten ist auch der Eingangsabschnitt über genau ein Auf-Zu-Ventil mit dem Gaseingang der Gasventileinheit verbindbar. Das Auf-Zu-Ventil stellt die einzige Verbindung des Eingangsabschnitts mit dem Gaseingang dar.

Vorteilhafterweise weisen die Drosselstellen -in Gasströmungsrichtung betrachtet- einen zunehmenden Strömungsquerschnitt auf. Die erste Drosselstelle mit dem geringsten Strömungsquerschnitt definiert die Mindestbrennleistung des Gasbrenners. Mit dieser Mindestbrennleistung wird der Gasbrenner betrieben, wenn nur das erste, in den Eingangsabschnitt der Drosselstrecke mündende Auf-Zu-Ventil geöffnet ist. Auf dem Weg zum Gasausgang der Gasventileinheit durchströmt der Gasstrom dann ebenfalls alle weiteren Drosselstellen der Drosselstrecke. Diese weiteren Drosselstellen besitzen einen größeren Strömungsquerschnitt und stellen für den kleinen Mindestgasstrom, der durch die erste Drosselstelle definiert ist, nur einen geringen Strömungswiderstand dar. Durch Öffnen des zweiten Auf-Zu-Ventils wird nun die erste Drosselstelle überbrückt, so dass nun die zweite Drosselstelle den für die Einstellung des Gasvolumenstroms maßgeblichen Strömungsquerschnitt definiert. Da die zweite Drosselstellung einen größeren Strömungsquerschnitt als die erste Drosselstelle aufweist, stellt sich auch der Gasvolumenstrom auf einen größeren Wert ein. Analog hierzu wird bei einem Öffnen des dritten Auf-Zu-Ventils die erste und die zweite Drosselstelle überbrückt. Maßgeblich für den Gasvolumenstrom ist dann der effektive Strömungsquerschnitt der auf dem Weg zum Ausgang verbleibenden weiteren Drosselstellen. Diese Funktionsweise setzt sich analog für die weiteren Drosselstellen mit den ihnen zugeordneten Auf-Zu-Ventilen fort.

Jede Drosselstelle besteht aus mindestens einer Einzeldrossel, die vorzugsweise als Drosselöffnung mit einem definierten Strömungsquerschnitt ausgeführt ist.

Mit besonderem Vorteil besteht jede Drosselstelle aus genau zwei hintereinander angeordneten Einzeldrosseln. Diese zwei Einzeldrosseln, die gemeinsam eine Drosselstelle bilden, besitzen vorzugsweise identische Strömungsquerschnitte. Um eine vergleichbare Drosselwirkung zu erhalten, können die beiden hintereinander angeordneten Einzeldrosseln jeweils einen größeren Querschnitt aufweisen, als eine Drosselstelle, die nur eine einzige Einzeldrossel aufweist. Die Herstellung von besonders kleinen Drosselöffnungen erweist sich in der Praxis als schwierig. Aus diesem Grund ist die Ausführungsform, bei der jede Drosselstelle aus zwei Einzeldrosseln besteht, einfacher herstellbar.

Die beschriebene Gasventileinheit ist derart ausgeführt, dass der die Gasventileinheit durchströmende Gasvolumenstrom gleich null ist, wenn alle Auf-Zu-Ventile geschlossen sind. Die Gasventileinheit ist damit auch zum vollständigen Unterbrechen der Gaszufuhr zum Gasbrenner geeignet.

Der die Gasventileinheit durchströmende Gasvolumenstrom ist auf einen Minimalwert eingestellt, bei dem ein der Gasventileinheit zugeordneter Gasbrenner mit Minimalleistung betrieben wird, wenn ausschließlich dass in den Eingangsabschnitt der Drosselstrecke mündende erste Auf-Zu-Ventil geöffnet ist. Wie oben bereits erläutert, werden bei dieser Einstellung der Auf-Zu-Ventile alle Drosselstellen der Drosselstrecke in Reihe von dem Gasvolumenstrom durchströmt.

Der die Gasventileinheit durchströmende Gasvolumenstrom ist auf einen Maximalwert eingestellt, bei dem ein der Gasventileinheit zugeordneter Gasbrenner mit Maximalleistung betrieben wird, wenn zumindest das in den -in Gasströmungsrichtung betrachtet- letzten Verbindungsabschnitt der Drosselstrecke mündende letzte Auf-Zu-Ventil geöffnet ist. Auf dem Weg von dem Gaseingang zu dem Gasausgang der Gasventileinheit durchströmt der Gasvolumenstrom dann nur die letzte Drosselstelle der Drosselstrecke. Diese letzte Drosselstelle weist einen Strömungsquerschnitt auf, der den Gasvolumenstrom nicht oder nur geringfügig drosselt.

Der die Gasventileinheit durchströmende Gasvolumenstrom ist auf einen Zwischenwert eingestellt, bei dem ein der Gasventileinheit zugeordneter Gasbrenner mit einer Leistung zwischen der minimalen Leistung und der maximalen Leistung betrieben wird, wenn zumindest eines der Auf-Zu-Ventile geöffnet ist, das in einen mittleren Verbindungsabschnitt, der zwischen dem Eingangsabschnitt und dem letzten Verbindungsabschnitt angeordnet ist mündet, und zumindest diejenigen Auf-Zu-Ventile, die in einen Verbindungsabschnitt stromabwärts des mittleren Verbindungsabschnitts münden, geschlossen sind. Wenn mehrere Auf-Zu-Ventile geöffnet sind, ist die Größe des Gasvolumenstroms durch die am weitesten stromabwärts liegende Drosselstelle, die direkt mit dem Gaseingang der Gasventileinheit verbunden ist, sowie durch die stromabwärts folgenden Drosselstellen bestimmt. Eine in Strömungsrichtung vor dieser am weitesten stromabwärts liegende Drosselstelle ebenfalls direkt mit dem Gaseingang verbundene weitere Drosselstelle trägt nicht zu dem Gasvolumenstrom am Gasausgang der Gasventileinheit bei.

Mit besonderem Vorteil ist ein Betätigungsmechanismus für die Auf-Zu-Ventile vorgesehen, der derart ausgeführt ist, dass entweder alle Auf-Zu-Ventile geschlossen sind oder dass genau ein Auf-Zu-Ventil geöffnet ist oder dass genau zwei Auf-Zu-Ventile geöffnet sind, welche mit zwei benachbarten Verbindungsabschnitten oder mit dem Eingangsabschnitt und dem benachbarten Verbindungsabschnitt verbunden sind. Die Auf-Zu-Ventile werden bei einer Betätigung der Gasventileinheit grundsätzlich nacheinander geschaltet. In jeder Schaltstufe ist im Normalfall genau ein Auf-Zu-Ventil geöffnet, während die anderen Auf-Zu-Ventile geschlossen sind, während eines Umschaltens von einer Schaltstellung auf die nächste Schaltstellung der Gasventileinheit ist sicherzustellen, dass zu keinem Zeitpunkt alle Auf-Zu-Ventile geschlossen sind. Stattdessen ist der Umschaltvorgang so ausgelegt, dass in einer Zwischenstellung zwischen zwei Schaltstellungen immer zwei benachbarte Auf-Zu-Ventile geöffnet sind. In dieser Zwischenstellung entspricht der Gasvolumenstrom exakt dem größeren Gasvolumenstrom der beiden benachbarten Schaltstellungen.

Gemäß einer besonders vorteilhaften Ausführung der Erfindung sind die Auf-Zu-Ventile mittels eines Permanentmagnets betätigbar. Die Magnetkraft des Permanentmagnets wird dabei eingesetzt, um das Auf-Zu-Ventil zu öffnen bzw. zu schließen.

Hierzu weist jedes Auf-Zu-Ventil einen bewegbaren Absperrkörper auf, der bei geschlossenem Auf-Zu-Ventil an einem Ventilsitz anliegt und dadurch eine Ventilöffnung im Ventilsitz verschließt.

Es ist eine Feder vorgesehen, die bei geschlossenem Auf-Zu-Ventil den Absperrkörper auf den Ventilsitz drückt. Zum Öffnen des Auf-Zu-Ventils ist der Absperrkörper mittels der Kraft eines Permanentmagnets von dem Ventilsitz abhebbar. Damit wird die Schließkraft jedes Auf-Zu-Ventils von einer Feder erzeugt, die das Auf-Zu-Ventil unabhängig von der Einbaulage der Gasventileinheit schließt. Mit der Kraft des Permanentmagnets kann der Absperrkörper entgegen der Kraft der Feder von dem Ventilsitz abgehoben werden. Zur Betätigung des Auf-Zu-Ventils ist die Position des Permanentmagnets relativ zu dem Absperrkörper des Auf-Zu-Ventils veränderbar. Zum Schalten der Gasventileinheit wird der Permanentmagnet über die Absperrkörper der Auf-Zu-Ventile hinweg bewegt. Diejenigen Absperrkörper, die sich in unmittelbarer Nähe des Permanentmagnets befinden, werden von dem Permanentmagnet angezogen und damit das Auf-Zu-Ventil geöffnet. Das Auf-Zu-Ventil bleibt dann solange geöffnet, bis der Permanentmagnet wieder aus dem Bereich des Absperrkörpers wegbewegt wird.

Gemäß einer besonderen Ausführung der Erfindung ist vorgesehen, dass - ausgehend von einer Schließstellung, in der alle Auf-Zu-Ventile geschlossen sind - bei einem Öffnen der Gasventileinheit zunächst das in den - in Gasströmungsrichtung betrachtet - letzten Verbindungsabschnitt der Drosselstrecke mündende letzte Auf-Zu-Ventil geöffnet wird. Dies bedeutet, dass bei einer Betätigung der Gasventileinheit diese sofort vollständig öffnet und anschließend der Gasstrom wieder stufenweise gedrosselt werden kann. Das sofortige vollständige Öffnen der Gasventileinheit hat den Vorteil, dass sich die Leitungen und der Gasbrenner hinter der Gasventileinheit schnell mit Gas füllen. Darüber hinaus kann nach einem Öffnen der Gasventileinheit ein nachgeschalteter Gasbrenner sofort bei maximalem Gasfluss gezündet werden.

Weitere Vorteile und Einzelheiten der Erfindung werden anhand der in den schematischen Figuren dargestellten Ausführungsbeispiele näher erläutert. Dabei zeigt
- Figur 1: eine schematische Schaltanordnung der Gasventileinheit mit einem ersten geöffneten Auf-Zu-Ventil,
- Figur 2: die schematische Schaltanordnung mit zwei geöffneten Auf-Zu-Ventilen,
- Figur 3: die schematische Schaltanordnung mit dem letzten geöffneten Auf-Zu-Ventil,
- Figur 4: den schematischen Aufbau der Gasventilanordnung mit geschlossenen Auf-Zu-Ventilen,
- Figur 5: den schematischen Aufbau mit einem geöffneten Auf-Zu-Ventil,
- Figur 6: den schematischen Aufbau mit den ersten beiden geöffneten Auf-Zu-Ventilen,
- Figur 7: den schematischen Aufbau mit dem geöffneten Auf-Zu-Ventil,
- Figur 8: den schematischen Aufbau mit dem letzten geöffneten Auf-Zu-Ventil,
- Figur 9: den Schematischen Aufbau einer Variante der Gasventileinheit,
- Figur 10: die Gasventileinheit in perspektivischer Ansicht schräg von oben,
- Figur 11: die perspektivische Ansicht mit Blick auf die Auf-Zu-Ventile,
- Figur 12: die Gasventileinheit in perspektivischer Ansicht schräg von unten.
- Figur 13: die perspektivische Ansicht mit Blick auf eine untere Gasverteilungsplatte,
- Figur 14: eine Explosionsdarstellung der Gasventileinheit, schräg von unten,
- Figur 15: eine Variante der Schaltanordnung gemäß Fig. 1-3 in vollständig geschlossenem Zustand,
- Figur 16: die Variante der Schaltanordnung in vollständig geöffnetem Zustand mit einem geöffneten Auf-Zu-Ventil,
- Figur 17: die Variante der Schaltanordnung in vollständig geöffnetem Zustand mit zwei geöffneten Auf-Zu-Ventilen,
- Figur 18: die Variante der Schaltanordnung in teilweise geöffnetem Zustand,
- Figur 19: die Variante der Schaltanordnung in minimal geöffnetem Zustand.

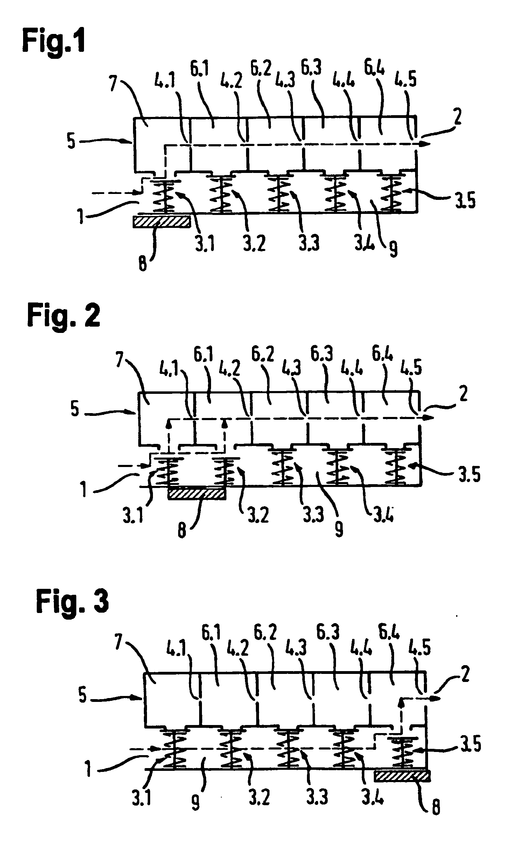

Figur 1 zeigt die Schaltanordnung der erfindungsgemäßen Gasventileinheit. Zu erkennen ist ein Gaseingang 1, mit dem die Gasventileinheit beispielsweise an eine Hauptgasleitung eines Gaskochgeräts angeschlossen ist. An dem Gaseingang 1 steht das zur Verbrennung vorgesehene Gas mit einem konstanten Druck, von beispielsweise 20 Millibar oder 50 Millibar an. An einen Gasausgang 2 der Gasventileinheit wird eine beispielsweise zu einem Gasbrenner des Gaskochgeräts führende Gasleitung angeschlossen. Der Gaseingang 1 ist über einen Gaseingangsraum 9 der Gasventileinheit mit der Eingangsseite der im vorliegenden Ausführungsbeispiel fünf Auf-Zu-Ventile 3 (3.1 bis 3.5) verbunden. Durch Öffnen der Auf-Zu-Ventile 3 ist der Gaseingang 1 jeweils mit einem bestimmten Abschnitt einer Drosselstrecke 5 verbunden, in den das Gas über das geöffnete Auf-Zu-Ventil 3 einströmt. Die Drosselstrecke 5 umfasst einen Eingangsabschnitt 7, in den das erste Auf-Zu-Ventil 3.1 mündet. Die weiteren Auf-Zu-Ventile 3.2 bis 3.5 münden jeweils in einen Verbindungsabschnitt 6 (6.1 bis 6.4) der Drosselstrecke 5. Der Übergang zwischen dem Eingangsabschnitt 7 und dem ersten Verbindungsabschnitt 6.1, sowie die Übergänge zwischen zwei benachbarten der Verbindungsabschnitte 6.1 bis 6.4 ist jeweils von einer Drosselstelle 4 (4.1 bis 4.5) gebildet. Die letzte Drosselstelle 4.5 verbindet den letzten Verbindungsabschnitt 6.4 mit dem Gasausgang 2. Die Drosselstellen 4.1 bis 4.5 besitzen eine der Reihe nach zunehmendem Öffnungsquerschnitt. Der Durchflussquerschnitt der letzten Drosselstelle 4.5 kann so groß gewählt sein, dass die letzte Drosselstelle 4.5 praktisch keine Drosselfunktion besitzt.

Die Betätigung der Auf-Zu-Ventile 3 erfolgt mittels eines Permanentmagnets 8, der entlang der Reihe der Auf Zu-Ventile 3 verschiebbar ist. Die Kraft zum Öffnen des jeweiligen Auf-Zu-Ventils 3 wird dabei direkt von der Magnetkraft des Permanentmagnets 8 gebildet. Diese Magnetkraft öffnet das jeweilige Auf-Zu-Ventil 3 entgegen einer Federkraft.

In der Schaltstellung gemäß Figur 1 ist ausschließlich das erste Auf-Zu-Ventil 3.1 geöffnet. Durch dieses Auf Zu-Ventil 3.1 strömt das Gas von dem Gaseingangsraum 9 in den Eingangsabschnitt 7 und passiert von dort aus auf dem Weg zum Gasausgang 2 sämtliche Drosselstellen 4 und sämtliche Verbindungsabschnitte 6. Die Menge des durch die Ventileinheit strömenden Gases gibt die Minimalleistung des an die Gasventileinheit angeschlossenen Gasbrenners vor.

Figur 2 zeigt die schematische Schaltanordnung, bei der der Permanentmagnet 8 derart nach in der Zeichnung rechts verschoben ist, dass sowohl das erste Auf-Zu-Ventil 3.1 als auch das zweite Auf-Zu-Ventil 3.2 geöffnet sind.

Durch das geöffnete zweite Auf-Zu-Ventil 3.2 strömt das Gas von dem Gaseingangsraum 9 direkt in den ersten Verbindungsabschnitt 6.1 und von dort über die Drosselstellen 4.2 bis 4.5 zum Gasausgang 2. Das zum Gasausgang 2 strömende Gas umgeht aufgrund des geöffneten Auf-Zu-Ventils 3.2 die erste Drosselstelle 4.1. Der Gasvolumenstrom in der Schaltstellung gemäß Figur 2 ist deshalb größer als der Gasvolumenstrom in der Schaltstellung gemäß Figur 1. Der Gaszufluss zu dem ersten Verbindungsabschnitt 6.1 erfolgt praktisch ausschließlich über das zweite Auf-Zu-Ventil 3.2. Aufgrund der offen stehenden Auf-Zu-Ventile 3.1 und 3.2 herrscht in dem Eingangsabschnitt 7 dasselbe Druckniveau wie in dem ersten Verbindungsabschnitt 6.1. Aus dem Eingangsabschnitt 7 strömt über die erste Drosselstelle 4.1 deshalb so gut wie kein Gas in den ersten Verbindungsabschnitt 6.1 nach. Der insgesamt durch die Gasventileinheit strömende Gasvolumenstrom ändert sich daher praktisch nicht, wenn der Permanentmagnet 8 weiter nach in der Zeichnung rechts bewegt wird und dadurch das erste Auf-Zu-Ventil 3.1 bei geöffnetem zweiten Auf-Zu-Ventil 3.2 geschlossen wird.

Durch Bewegen des Permanentmagnets 8 nach in der Zeichnung rechts werden die Auf-Zu-Ventile 3.3. bis 3.5 sukzessive geöffnet und dadurch der Gasvolumenstrom durch die Gasventileinheit schrittweise erhöht.

Figur 3 zeigt die schematische Schaltanordnung der Gasventileinheit in maximal geöffneter Stellung. Hierbei befindet sich der Permanentmagnet 8 in seiner Endstellung auf der in der Zeichnung rechten Seite. Das letzte Auf-Zu-Ventil 3.5 ist bei dieser Position des Permanentmagnets 8 geöffnet. Gas strömt hierbei direkt aus dem Gaseingangsraum 9 in den letzten Verbindungsabschnitt 6.4 und passiert auf dem Weg zum Gasausgang 2 ausschließlich die letzte Drosselstelle 4.5. Diese letzte Drosselstelle 4.5 kann einen derart großen Durchflussquerschnitt aufweisen, dass praktisch keine Drosselung des Gasstroms eintritt und das Gas die Gasventileinheit praktisch ungedrosselt durchströmen kann.

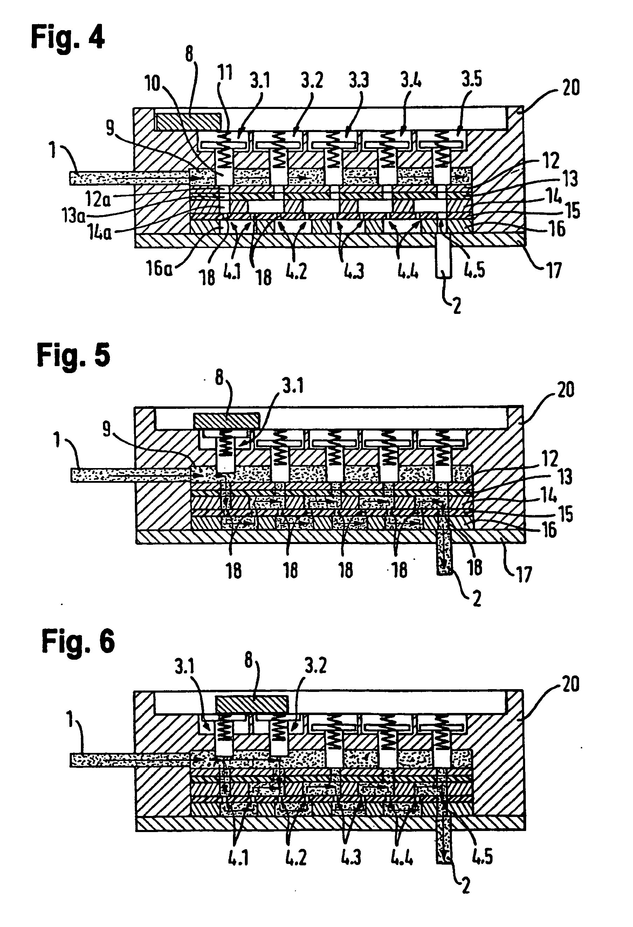

Die Figuren 4 bis 8 zeigen schematisch einen konstruktiven Aufbau einer Gasventileinheit mit einer Schaltanordnung gemäß Figur 1 bis 3. Zu erkennen ist ein Ventilkörper 20, in dem der Gaseingang 1 der Gasventileinheit ausgeführt ist. Im Inneren des Ventilkörpers 20 befindet sich ein mit dem Gaseingang 1 verbundener Gaseingangsraum 9. Absperrkörper 10 der Auf-Zu-Ventile 3 sind in dem Ventilkörper 20 geführt, derart, dass sie sich in der Zeichnung nach oben und unten bewegen können. Jeder Absperrkörper 10 ist mittels einer Feder 11 nach in der Zeichnung unten vorgespannt. Mittels der Kraft des Permanentmagnets 8 kann jeder Absperrkörper 10 entgegen der Kraft der Feder 11 nach in der Zeichnung oben bewegt werden. Die Federn 11 drücken die Absperrkörper auf eine Ventildichtplatte 12, so dass die Absperrkörper 10 in der Ventildichtplatte 12 vorhandene Öffnungen 12a gasdicht verschließen. Unterhalb der Ventildichtplatte 12 ist eine Druckplatte 13 angeordnet, mit Öffnungen 13a, die mit den Öffnungen 12a in der Ventildichtplatte 12 korrespondieren. Die Öffnungen 13a in der Druckplatte 13 münden in Öffnungen 14a in eine erste Gasverteilungsplatte 14. In der Zeichnung unterhalb der ersten Gasverteilungsplatte 14 befindet sich eine Drosselplatte 15 mit einer Vielzahl von Drosselöffnungen 18. Jede der Drosselstellen 4.1 bis 4.4 wird dabei von zwei Drosselöffnungen 18 gebildet. Die zwei zu einer Drosselstelle 4.1 bis 4.4 gehörenden Drosselöffnungen 18 sind jeweils mittels der Öffnungen 16a in einer zweiten Gasverteilungsplatte 16 miteinander verbunden. Die Öffnungen 14a in der ersten Gasverteilungsplatte verbinden hingegen die nebeneinander liegenden Drosselöffnungen 18 zweier benachbarter Drosselstellen 4.1 bis 4.5. Die letzte Drosselstelle 4.5 besteht aus nur einer Drosselöffnung 18, welche über eine korrespondierende Öffnung 16a in der zweiten Gasverteilungsplatte 16 in den Gasausgang 2 der Gasventileinheit mündet.

Bei der Schaltstellung gemäß Figur 4 befindet sich der Permanentmagnet 8 in einer Endposition, in der alle Auf-Zu-Ventile 3 geschlossen sind. Die Gasventileinheit ist damit insgesamt geschlossen. Der Gasvolumenstrom ist gleich null.

Figur 5 zeigt den schematischen Aufbau der Gasventileinheit bei geöffnetem erstem Auf-Zu-Ventil 3.1. Das Gas strömt vom Gaseingang 1 in den Gaseingangsraum 9 und von dort über die jeweils erste Öffnung der Ventildichtplatte 12, der Druckplatte 13 und der ersten Gasverteilungsplatte 14 zur Drosselplatte 15. Auf dem Weg zum Gasausgang 2 durchströmt das Gas alle Drosselöffnungen 18 der Drosselplatte 15 sowie alle Öffnungen 14a der ersten Gasverteilungsplatte 14 und alle Öffnungen 16a der zweiten Gasverteilungsplatte 16.

Figur 6 stellt den schematischen Aufbau mit geöffnetem ersten Auf-Zu-Ventil 3.1 und geöffnetem zweiten Auf-Zu-Ventil 3.2 dar. Infolge des geöffneten zweiten Auf-Zu-Ventils 3.2 sind die Drosselöffnungen 18 der ersten Drosselstelle 4.1 überbrückt, so dass das Gas direkt zur zweiten Drosselstelle 4.2 gelangt und auf dem Weg zum Gasausgang 2 die weiteren Drosselstellen 4.3 bis 4.5 durchströmt. Infolge des geöffneten ersten Auf-Zu-Ventils 3.1 ist der Gasweg über die erste Drosselstelle 4.1 offen. Augrund des gleichen Druckniveaus auf beiden Seiten der ersten Drosselstelle 4.1 strömt durch die erste Drosselstelle 4.1 praktisch kein Gas.

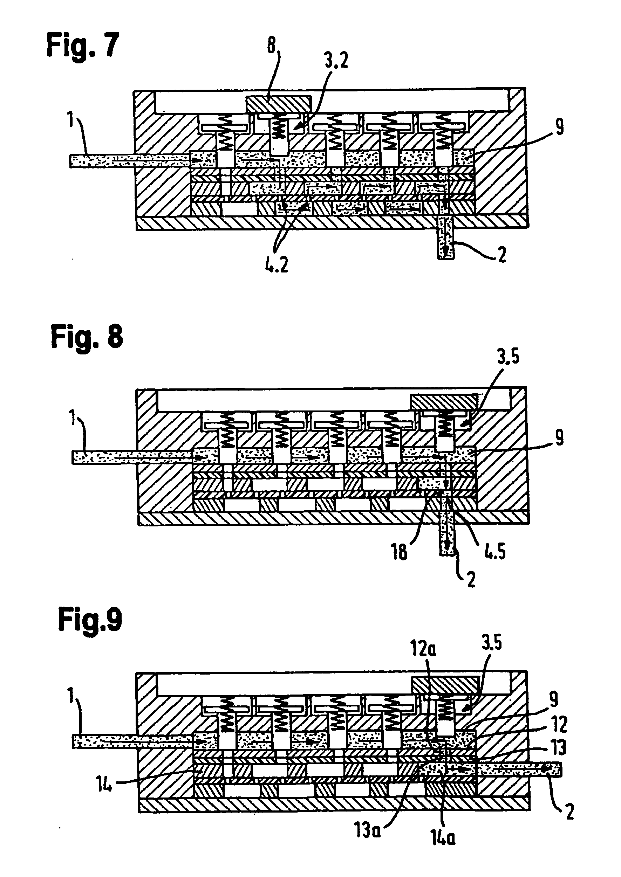

In Figur 7 ist der schematische Aufbau mit geöffnetem zweitem Auf-Zu-Ventil 3.2 dargestellt. Alle übrigen Auf-Zu-Ventile 3.1 und 3.3 bis 3.5 sind geschlossen. Der Gasvolumenstrom durch die Gasventileinheit ist praktisch identisch zu dem Gasvolumenstrom in der Ventilstellung gemäß Figur 6.

Der Permanentmagnet 8 und die Bauteile der Auf-Zu-Ventile 3 sind derart aufeinander abgestimmt, dass bei geöffneter Gasventileinheit entweder genau ein Auf-Zu-Ventil 3 oder genau zwei Auf-Zu-Ventile 3 geöffnet sind. Während des Umschaltens von einem Auf-Zu-Ventil 3 auf ein benachbartes Auf-Zu-Ventil 3 sind kurzzeitig immer beide benachbarte Auf-Zu-Ventile 3 geöffnet. Damit ist sichergestellt, dass ein Umschalten nicht zu einer kurzzeitigen Unterbrechung der Gaszufuhr zu einem Gasbrenner und damit zu einem Flackern oder einem Erlöschen der Gasflammen führt. Mit der oben beschriebenen Schaltung ist ebenfalls sichergestellt, dass während eines Umschaltvorgangs auch keine kurzzeitige Erhöhung des Gasvolumenstroms eintritt. Auch ein Aufflackern der Gasflammen während eines Umschaltvorgangs ist damit sicher verhindert.

Figur 8 zeigt schließlich die schematische Darstellung der Gasventileinheit, wenn ausschließlich das letzte Auf-Zu-Ventil 3.5 geöffnet ist. Das Gas strömt hierbei vom Gaseingang über den Gaseingangsraum, das geöffnete Auf-Zu-Ventil 3.5 und die diesem zugeordnete letzte Drosselöffnung 18 praktisch ungehindert zum Gasausgang.

In Figur 9 ist der schematische Aufbau einer Variante der Gasventileinheit dargestellt. Im Gegensatz zu der Ausführung gemäß Fig. 4 bis 8 zweigt hier der Gasausgang 2 direkt von der ersten Gasverteilungsplatte 14 ab. Bei geöffnetem Auf-Zu-Ventil 3.5 strömt das Gas ungedrosselt über den Gaseingang 1, den Gaseingangsraum 9, das Auf-Zu-Ventil 3.5, die letzte Öffnung 12a in der Ventildichtplatte 12, die letzte Öffnung 13a in der Druckplatte 13 und die letzte Öffnung 14a in der ersten Gasverteilungsplatte 14 zum Gasausgang 2. Die letzte Drosselstelle 4.5 (siehe Fig. 4 bis 8) ist bei der Variante gemäß Figur 9 nicht vorhanden.

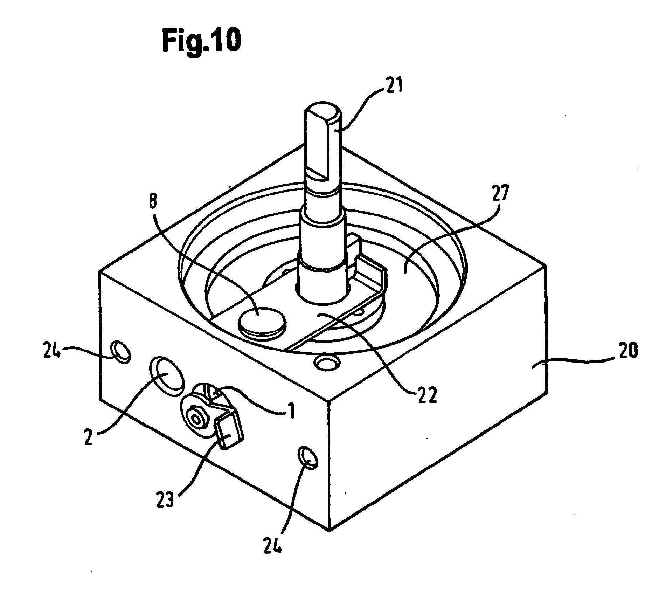

In Figur 10 ist ein Ausführungsbeispiel der Gasventileinheit in perspektivischer Ansicht schräg von oben dargestellt. Zu erkennen ist ein Ventilkörper 20 in dem eine Schaltwelle 21 der Gasventileinheit drehbar gelagert ist. An die Schaltwelle 21 ist ein Mitnehmer 22 gekoppelt, der eine Drehbewegung der Schaltwelle 21 auf einen Permanentmagnet 8 überträgt, der damit bei einer Drehbewegung der Schaltwelle 21 auf einer Kreisbahn geführt wird. Eine Abdeckung 27 bildet eine Gleitfläche für den Permanentmagnet 8 und stellt einen definierten Abstand zwischen dem Permanentmagnet 8 und den Auf-Zu-Ventilen 3 her. Zu erkennen ist weiter der Gasausgang 2 sowie ein in dem Gaseingang 1 angeordneter Betätigungshebel 23 für eine nicht dargestellte Magnetventileinheit. Der Betätigungshebel 23 ist an die Schaltwelle derart gekoppelt, dass bei einem axialen Drücken der Schaltwelle der Betätigungshebel 23 aus dem Ventilkörper 20 ausfährt. Durch Drücken der Schaltwelle 21 kann damit die Magnetventileinheit geöffnet werden. Bohrungen 24 dienen zur Befestigung der Magnetventileinheit an dem Ventilkörper.

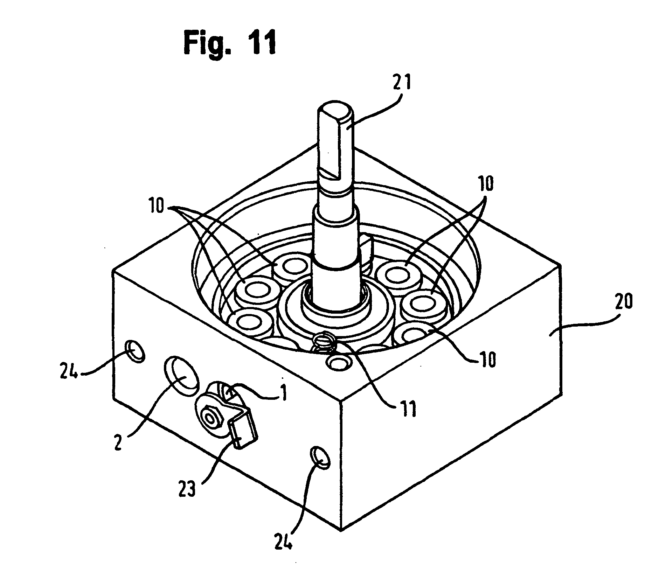

Figur 11 zeigt die Ansicht gemäß Figur 10, unter Weglassung des Mitnehmers 22, des Permanentmagnets 8. Zu erkennen sind in Figur 11 insbesondere die ringförmig angeordneten Absperrkörper 10 der Auf-Zu-Ventile 3. Jedem der Absperrkörper 10 ist eine Feder 11 zugeordnet, die den Absperrkörper 10 nach in der Zeichnung unten drückt. In der Figur 11 ist beispielhaft eine der Federn 11 abgebildet.

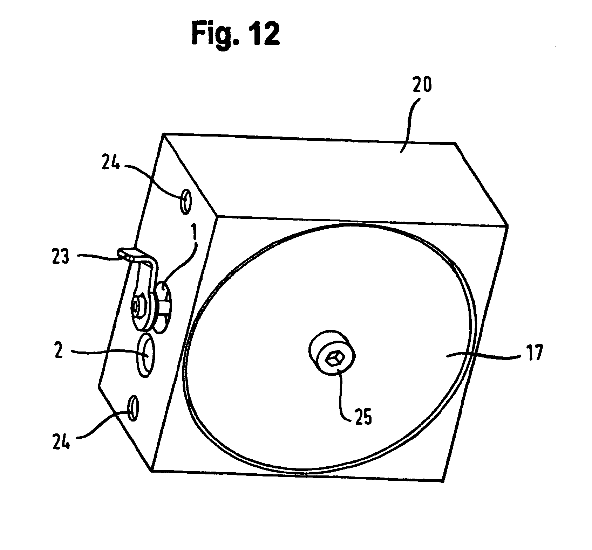

In Figur 12 ist die Gasventileinheit in perspektivischer Ansicht schräg von unten abgebildet. Zu erkennen ist hier insbesondere eine Abschlussplatte 17, welche die in der Figur nicht dargestellten übrigen Platten, die Ventildichtplatte 12, die Druckplatte 13, die erste Gasverteilungsplatte 14, die Drosselplatte 15 und die zweite Gasverteilungsplatte 16 zusammendrückt. Die hierfür erforderliche Kraft wird mittels einer Schraube 25 erzeugt.

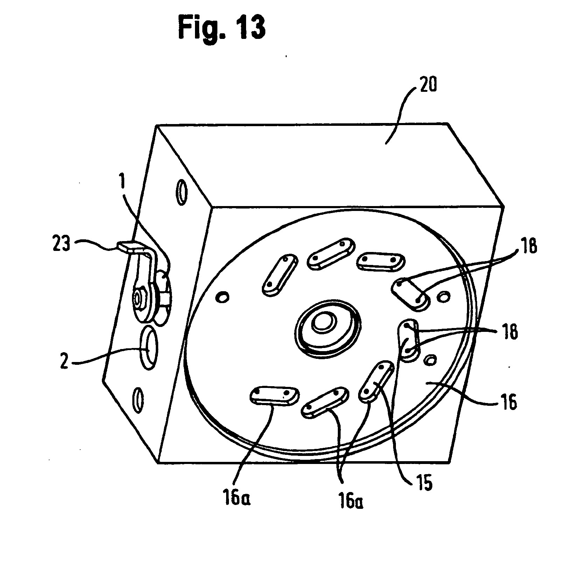

Figur 13 zeigt die Ansicht gemäß Figur 12 mit abgenommener Abschlussplatte 17. Zu erkennen ist hier die zweite Gasverteilungsplatte 16 mit den Öffnungen 16a. Durch diese Öffnungen 16a sind Ausschnitte der Drosselplatte 15 mit den darin befindlichen Drosselöffnungen 18 sichtbar. Zu erkennen ist ebenfalls, dass jeweils zwei Drosselöffnungen 18 über eine Öffnung 16a der zweiten Gasverteilungsplatte 16 verbunden sind.

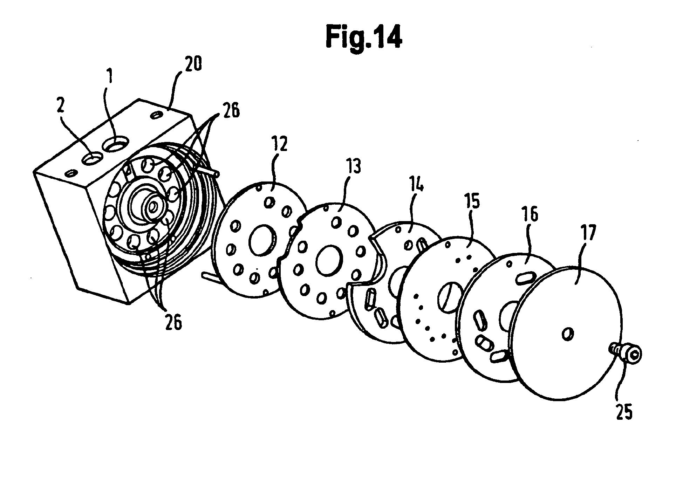

Der schichtweise Aufbau der Gasventileinheit ist anhand Figur 14 mit einer Explosionsdarstellung verdeutlicht. Zu erkennen ist hier der Ventilkörper 20 mit Führungsbohrungen 26 für die in der vorliegenden Ansicht nicht dargestellten Absperrkörper 10 der Auf-Zu-Ventile 3. In den Ventilkörper 20 werden die nachfolgend genannten Platten in folgender Reihenfolge eingesetzt: Ventildichtplatte 12, Druckplatte 13, erste Gasverteilungsplatte 14, Drosselplatte 15, zweite Gasverteilungsplatte 16, Abschlussplatte 17. Die Schraube 25 drückt die sich am Ventilkörper 20 abstützenden Platten 12, 13, 14, 15, 16, 17 aufeinander.

Im vorliegenden Ausführungsbeispiel sind die Platten 12, 13, 14, 15, 16, 17 einzeln in den Ventilkörper 20 eingesetzt. Möglich ist es jedoch auch, die Platten 12, 13, 14, 15, 16, 17 als Paket vorzufertigen, so dass sie nur gemeinsam in den Ventilkörper 20 eingesetzt und wieder entnommen werden können. Zum Umrüsten der Gasventileinheit auf eine andere Gasart muss dann, je nach Bauweise, entweder nur die Drosselplatte 15, oder das gesamte Paket der Platten 12, 13, 14, 15, 16, 17 ausgetauscht werden.

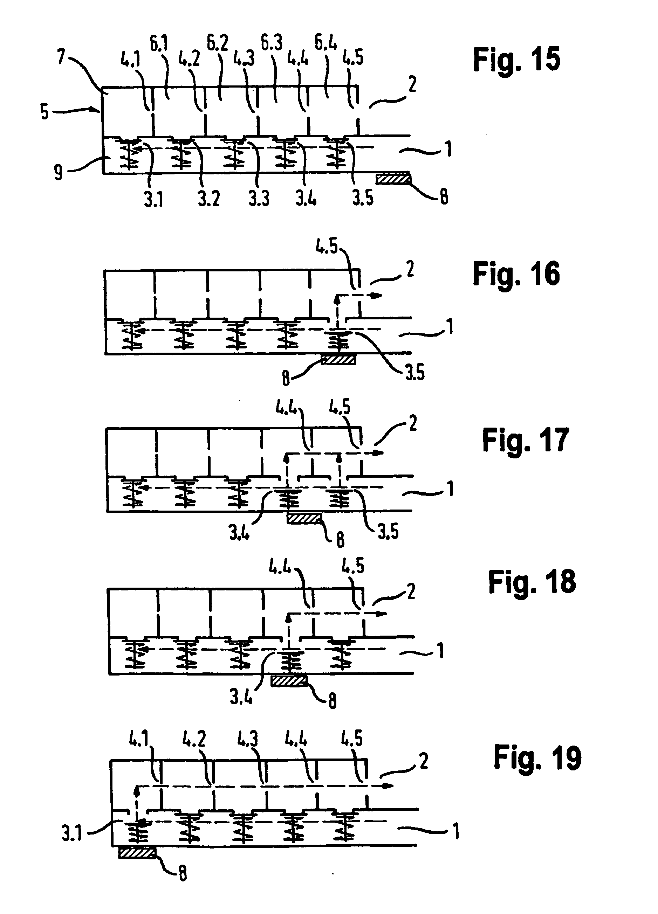

Figur 15 zeigt eine Variante der Schaltanordnung gemäß Figur 1 bis 3. Die Anordnung der Drosselstrecke 5 mit den Drosselstellen 4 (4.1 bis 4.5) entspricht exakt der Anordnung gemäß Figur 1 bis 3. Auch die Anordnung des Gaseingangsraums 9, sowie der Auf-Zu-Ventile 3 (3.1 bis 3.5) entspricht dem Ausführungsbeispiel gemäß Figur 1 bis 3. Im Gegensatz zu dem Ausführungsbeispiel gemäß Figur 1 bis 3 befindet sich der Gaseingang 1 auf der in der Zeichnung rechten Seite des Gaseingangsraums 9. Der Ort des Gaseingangs 1 bezüglich des Gaseingangsraums 9 und damit auch die Strömungsrichtung des Gases innerhalb des Gaseingangsraums 9 sind jedoch für die Funktion der Gasventileinheit weitgehend unerheblich. Innerhalb der Drosselstrecke 5 strömt das Gas, analog zur Anordnung gemäß Figur 1 bis 3, in Richtung von links nach rechts. Folglich wird die in der Zeichnung linke Drosselstelle 4.1 als erste Drosselstelle bezeichnet. Die in der Zeichnung rechte Drosselstelle 4.5 wird als letzte Drosselstelle bezeichnet. Dieser Nomenklatur folgend wird im Folgenden - wie auch in dem Ausführungsbeispiel gemäß Figur 1 bis 3 - das in der Zeichnung linke Auf-Zu-Ventil 3.1 als erstes Auf-Zu-Ventil bezeichnet und das in der Zeichnung rechte Auf-Zu-Ventil 3.5 als letztes Auf-Zu-Ventil.

In der in Figur 15 dargestellten Schaltposition befindet sich der Permanentmagnet 8 rechts von dem letzten Auf-Zu-Ventil 3.5. Der Permanentmagnet 8 übt damit auf keines der Auf-Zu-Ventile 3 eine magnetische Kraft aus, so dass folglich keines der Auf-Zu-Ventile 3.1 bis 3.5 geöffnet ist. Damit ist die Gasventileinheit vollständig geschlossen und die Verbindung zwischen Gaseingang 1 und Gasausgang 2 ist vollständig blockiert.

Um ausgehend von dieser Schaltposition die Gasventileinheit zu öffnen, wird der Permanentmagnet 8 nach links in den Bereich des letzten Auf-Zu-Ventils 3.5 verschoben.

Diese Schaltposition, in der die Gasventileinheit maximal geöffnet ist, ist in Figur 16 dargestellt. Das Gas strömt dabei von dem Gaseingang 1 über das geöffnete letzte Auf-Zu-Ventil 3.5 und die letzte Drosselstelle 4.5 direkt zum Gasausgang 2. Die letzte Drosselstelle 4.5 kann einen derart großen Öffnungsquerschnitt aufweisen, dass praktisch keine Drosselung des Gasstroms erfolgt. In diesem Fall strömt das Gas praktisch ungehindert durch die Gasventileinheit.

Durch Bewegen des Permanentmagnets 8 nach in der Zeichnung links kann der Gasstrom durch die Gasventileinheit nun stufenweise gedrosselt werden. Figur 17 zeigt eine Zwischenstellung des Permanentmagnets 8, in der dieser beide Auf-Zu-Ventile 3.4 und 3.5 öffnet. Der Gasvolumenstrom zum Gasausgang 2 ist hierbei jedoch praktisch identisch zu dem Gasvolumenstrom in der Schaltstellung gemäß Figur 16.

In der Schaltstellung gemäß Figur 18 öffnet der Permanentmagnet ausschließlich das Auf-Zu-Ventil 3.4. Auf dem Weg zum Gasausgang 2 führt der Gasstrom sowohl durch die Drosselstelle 4.4 als auch durch die Drosselstelle 4.5. Der Öffnungsquerschnitt der Drosselstelle 4.4 ist kleiner als der Öffnungsquerschnitt der Drosselstelle 4.5, so dass der Gasstrom etwas gedrosselt wird.

Figur 19 zeigt die Gasventileinheit in minimaler Öffnungsstellung, bei der ausschließlich das Auf-Zu-Ventil 3.1 geöffnet ist. Auf dem Weg zum Gasausgang 2 strömt das Gas durch alle Drosselstellen 4.1 bis 4.5. Die Drosselstellen 4 besitzen, in Gasströmungsrichtung in der Drosselstrecke 5 betrachtet, einen zunehmenden Querschnitt. Somit ist der sich einstellende Gasvolumenstrom maßgeblich durch die Drosselstelle 4.1 bestimmt, die den kleinsten Öffnungsquerschnitt besitzt. Der den Gasvolumenstrom ebenfalls beeinflussende Strömungswiderstand durch die übrigen Drosselstellen 4.2 bis 4.5 ist bei der Auslegung der Öffnungsquerschnitte berücksichtigt.

Bei der Schaltanordnung gemäß Figur 15 bis 19 befindet sich die Gasventileinheit sofort in maximal geöffneter Position, wenn sie ausgehend von ihrer Schließstellung betätigt wird. Dies hat den positiven Effekt, dass sich die der Gasventileinheit nachgeschalteten gasführenden Leitungen und Gasbrenner besonders schnell mit Gas füllen. Darüber hinaus kann ein Zünden des Gasbrenners sofort nach dem Öffnen der Gasventileinheit bei maximalen Gasvolumenstrom erfolgen, wodurch der Zündvorgang erleichtert wird.

### Bezugszeichenliste

- 1: Gaseingang
- 2: Gasausgang
- 3 (3.1 bis 3.5): Auf-Zu-Ventile
- 4 (4.1 bis 4.5): Drosselstellen
- 5: Drosselstrecke
- 6 (6.1 bis 6.4): Verbindungsabschnitt
- 7: Eingangsabschnitt
- 8: Permanentmagnet
- 9: Gaseingangsraum
- 10: Absperrkörper
- 11: Feder
- 12: Ventildichtplatte
- 12a: Öffnungen
- 13: Druckplatte
- 13a: Öffnungen
- 14: erste Gasverteilungsplatte
- 14a: Öffnungen
- 15: Drosselplatte
- 16: zweite Gasverteilungsplatte
- 16a: Öffnungen
- 17: Abschlussplatte
- 18: Drosselöffnungen
- 20: Ventilkörper
- 21: Schaltwelle
- 22: Mitnehmer
- 23: Betätigungshebel
- 24: Bohrungen
- 25: Schraube
- 26: Führungsbohrungen
- 27: Abdeckung

## Patentansprüche

1. Gasventileinheit zum Einstellen eines einem Gasbrenner eines Gasgerätes, insbesondere eines Gaskochgeräts, zugeführten Gasvolumenstroms, wobei die Gasventileinheit einen Gaseingang (1), mindestens zwei Auf-Zu-Ventile (3), mindestens zwei Drosselstellen (4) sowie einen Gasausgang (2) aufweist, wobei, die Gasventileinheit eine Drosselstrecke (5) umfasst, in der die Drosselstellen (4) in Reihe angeordnet sind und die jeweils zwischen zwei benachbarten Drosselstellen (4) einen Verbindungsabschnitt (6) aufweist, und dass mindestens zwei Auf-Zu-Ventile (3) eingangsseitig mit dem Gaseingang (1) verbunden sind und mindestens ein Auf-Zu-Ventil (3) ausgangsseitig in einen Verbindungsabschnitt (6) der Drosselstrecke (5) mündet, **dadurch gekennzeichnet, dass** die Drosselstrecke (5) mehrere, vorzugsweise mindestens vier Drosselstellen (4) aufweist, dass die Drosselstrecke (5) jeweils zwischen zwei benachbarten Drosselstellen (4) einen Verbindungsabschnitt (6) aufweist, und dass in jeden der Verbindungsabschnitte (6) ein Auf-Zu-Ventil (3) mündet..

2. Gasventileinheit nach Anspruch 1 , **dadurch gekennzeichnet, dass** die Drosselstrecke (5) vor der - in Gasströmungsrichtung betrachtet - ersten Drosselstelle (4.1) einen Eingangsabschnitt (7) aufweist, und dass ein Auf-Zu-Ventil (3.1) eingangsseitig mit dem Gaseingang (1) verbunden ist und ausgangsseitig in den Eingangsabschnitt (7) der Drosselstrecke (5) mündet.

3. Gasventileinheit nach Anspruch 1 oder 2, **dadurch gekennzeichnet, dass** die Drosselstellen (4) - in Gasströmungsrichtung betrachtet - einen zunehmenden Strömungsquerschnitt aufweisen.

4. Gasventileinheit nach einem der Ansprüche 1 bis 3, **dadurch gekennzeichnet, dass** jede Drosselstelle (4) aus mindestens einer Einzeldrossel besteht, die vorzugsweise als Drosselöffnung (18) mit einem definierten Strömungsquerschnitt ausgeführt ist.

5. Gasventileinheit nach einem der Ansprüche 1 bis 4, **dadurch gekennzeichnet, dass** jede Drosselstelle (4) aus genau zwei hintereinander angeordneten Einzeldrosseln besteht.

6. Gasventileinheit nach einem der Ansprüche 1 bis 5, **dadurch gekennzeichnet, dass** der die Gasventileinheit durchströmende Gasvolumenstrom gleich null ist, wenn alle Auf-Zu-Ventile (3) geschlossen sind.

7. Gasventileinheit nach einem der Ansprüche 1 bis 6, **dadurch gekennzeichnet, dass** der die Gasventileinheit durchströmende Gasvolumenstrom auf einen Minimalwert eingestellt ist, bei dem ein der Gasventileinheit zugeordneter Gasbrenner mit Minimalleistung betrieben wird, wenn ausschließlich das in den Eingangsabschnitt (7) der Drosselstrecke (5) mündende erste Auf-Zu-Ventil (3.1) geöffnet ist.

8. Gasventileinheit nach einem der Ansprüche 1 bis 7, **dadurch gekennzeichnet, dass** der die Gasventileinheit durchströmende Gasvolumenstrom auf einen Maximalwert eingestellt ist, bei dem ein der Gasventileinheit zugeordneter Gasbrenner mit Maximalleistung betrieben wird, wenn zumindest das in den - in Gasströmungsrichtung betrachtet - letzten Verbindungsabschnitt (6.4) der Drosselstrecke (5) mündende letzte Auf-Zu-Ventil (3.5) geöffnet ist.

9. Gasventileinheit nach einem der Ansprüche 1 bis 8, **dadurch gekennzeichnet, dass** der die Gasventileinheit durchströmende Gasvolumenstrom auf einen Zwischenwert eingestellt ist, bei dem ein der Gasventileinheit zugeordneter Gasbrenner mit einer Leistung zwischen der Minimalleistung und der Maximalleistung betrieben wird, wenn zumindest eines der Auf-Zu-Ventile (3.2, 3.3, 3.4) geöffnet ist, das in einen mittleren Verbindungsabschnitt (6.1, 6.2, 6.3), der zwischen dem Eingangsabschnitt (7) und dem letzten Verbindungsabschnitt (6.4) angeordnet ist, mündet, und zumindest diejenigen Auf-Zu-Ventile (3), die in einen Verbindungsabschnitt (6) stromabwärts des mittleren Verbindungsabschnitts (6.1, 6.2, 6.3) münden, geschlossen sind.

10. Gasventileinheit nach einem der Ansprüche 1 bis 9, **dadurch gekennzeichnet, dass** ein Betätigungsmechanismus für die Auf-Zu-Ventile (3) vorgesehen ist, der derart ausgeführt ist, dass entweder alle Auf-Zu-Ventile (3) geschlossen sind, oder dass genau ein Auf-Zu-Ventil (3) geöffnet ist oder dass genau zwei Auf-Zu-Ventile (3) geöffnet sind, welche mit zwei benachbarten Verbindungsabschnitten (6) oder mit dem Eingangsabschnitt (7) und dem benachbarten Verbindungsabschnitt (6.1) verbunden sind.

11. Gasventileinheit nach einem der Ansprüche 1 bis 10, **dadurch gekennzeichnet, dass** die Auf-Zu-Ventile (3) mittels eines Permanentmagnets (8) betätigbar sind.

12. Gasventileinheit nach einem der Ansprüche 1 bis 11, **dadurch gekennzeichnet, dass** jedes Auf-Zu-Ventil (3) einen bewegbaren Absperrkörper (10) aufweist, der bei geschlossenem Auf-Zu-Ventil (3) an einem Ventilsitz anliegt und dadurch eine Ventilöffnung (12a) im Ventilsitz verschließt

13. Gasventileinheit nach Anspruch 12, **dadurch gekennzeichnet, dass** eine Feder (11) vorgesehen ist, die bei geschlossenem Auf-Zu-Ventil (3) den Absperrkörper (10) auf den Ventilsitz drückt und dass zum Öffnen des Auf-Zu-Ventils (3) der Absperrkörper (10) mittels der Kraft eines Permanentmagnets (8) von dem Ventilsitz abhebbar ist.

14. Gasventileinheit nach Anspruch 13, **dadurch gekennzeichnet, dass** zur Betätigung des Auf-Zu-Ventils (3) die Position des Permanentmagnets (8) relativ zu dem Absperrkörper (10) des Auf-Zu-Ventils (3) veränderbar ist.

15. Gasventileinheit nach einem der Ansprüche 1 bis 14, **dadurch gekennzeichnet, dass** - ausgehend von einer Schließstellung, in der alle Auf-Zu-Ventile (3) geschlossen sind - bei einem Öffnen der Gasventileinheit zunächst das in den - in Gasströmungsrichtung betrachtet - letzten Verbindungsabschnitt (6.4) der Drosselstrecke (5) mündende letzte Auf-Zu-Ventil (3.5) geöffnet wird.

## Claims

1. Gas valve unit for adjusting a volumetric gas flow supplied to a gas burner of a gas appliance, in particular a gas cooking appliance, the gas valve unit having a gas inlet (1), at least two open/close valves (3), at least two throttle points (4) and a gas outlet (2), wherein the gas valve unit includes a throttle segment (5) in which the throttle points (4) are arranged in series and which has a connecting section (6) between two adjacent throttle points (4) in each case, and in that at least two open/close valves (3) are connected on the inlet side to the gas inlet (1) and on the outlet side at least one open/close valve (3) leads into a connecting section (6) of the throttle segment (5), **characterised in that** the throttle segment (5) has a plurality of, preferably at least four, throttle points (4), **in that** the throttle segment (5) has a connecting section (6) between two adjacent throttle points (4) in each case, and **in that** an open/close valve (3) leads into each of the connecting sections (6).

2. Gas valve unit according to claim 1, **characterised in that** upstream of the first throttle point (4.1) - viewed in the gas flow direction - the throttle segment (5) has an inlet section (7), and **in that** an open/close valve (3.1) is connected on the inlet side to the gas inlet (1) and on the outlet side leads into the inlet section (7) of the throttle segment (5).

3. Gas valve unit according to claim 1 or 2, **characterised in that** - viewed in the gas flow direction - the throttle points (4) have an increasing flow cross-section.

4. Gas valve unit according to one of claims 1 to 3, **characterised in that** each throttle point (4) consists of at least one individual throttle which is preferably embodied as a throttle opening (18) having a defined flow cross-section.

5. Gas valve unit according to one of claims 1 to 4, **characterised in that** each throttle point (4) consists of precisely two individual throttles arranged in series.

6. Gas valve unit according to one of claims 1 to 5, **characterised in that** the volumetric gas flow flowing through the gas valve unit is equal to zero when all of the open/close valves (3) are closed.

7. Gas valve unit according to one of claims 1 to 6, **characterised in that** the volumetric gas flow flowing through the gas valve unit is set to a minimum value at which a gas burner associated with the gas valve unit is operated at minimum power when only the first open/close valve (3.1) leading into the inlet section (7) of the throttle segment (5) is open.

8. Gas valve unit according to one of claims 1 to 7, **characterised in that** the volumetric gas flow flowing through the gas valve unit is set to a maximum value at which a gas burner associated with the gas valve unit is operated at maximum power when at least the last open/close valve (3.5) leading into the last - viewed in the gas flow direction - connecting section (6.4) of the throttle segment (5) is open.

9. Gas valve unit according to one of claims 1 to 8, **characterised in that** the volumetric gas flow flowing through the gas valve unit is set to an intermediate value at which a gas burner associated with the gas valve unit is operated at a power between the minimum power and the maximum power when at least one of the open/close valves is open (3.2, 3.3, 3.4) which leads into a middle connecting section (6.1, 6.2, 6.3) that is disposed between the inlet section (7) and the last connecting section (6.4), and at least those open/close valves (3) which lead into a connecting section (6) downstream of the middle connecting section (6.1, 6.2, 6.3) are closed.

10. Gas valve unit according to one of claims 1 to 9, **characterised in that** an actuating mechanism for the open/close valves (3) is provided which is embodied in such a way that either all of the open/close valves (3) are closed, or precisely one open/close valve (3) is open, or precisely two open/close valves (3) are open which are connected to two adjacent connecting sections (6) or to the inlet section (7) and the adjacent connecting section (6.1).

11. Gas valve unit according to one of claims 1 to 10, **characterised in that** the open/close valves (3) can be actuated by means of a permanent magnet (8).

12. Gas valve unit according to one of claims 1 to 11, **characterised in that** each open/close valve (3) has a movable shut-off body (10) which bears against a valve seat when the open/close valve (3) is closed and thereby seals a valve orifice (12a) in the valve seat.

13. Gas valve unit according to claim 12, **characterised in that** a spring (11) is provided which presses the shut-off body (10) onto the valve seat when the open/close valve (3) is in the closed state and **in that** in order to open the open/close valve (3) the shut-off body (10) can be lifted off from the valve seat by means of the force of a permanent magnet (8).

14. Gas valve unit according to claim 13, **characterised in that** the position of the permanent magnet (8) relative to the shut-off body (10) of the open/close valve (3) can be varied in order to actuate the open/close valve (3).

15. Gas valve unit according to one of claims 1 to 14, **characterised in that** - starting from a closed position in which all of the open/close valves (3) are closed - when the gas valve unit is opened, the last open/close valve (3.5) leading into the last - viewed in the gas flow direction - connecting section (6.4) of the throttle segment (5) is opened first.

## Revendications

1. Unité de vannes à gaz destinée à régler un débit volumétrique de gaz amené à un brûleur à gaz d'un appareil à gaz, notamment d'un appareil de cuisson à gaz, l'unité de vannes à gaz présentant une entrée de gaz (1), au moins deux vannes tout ou rien (3), au moins deux points d'étranglement (4) ainsi qu'une sortie de gaz (2), l'unité de vannes à gaz comprenant un trajet d'étranglement (5), dans lequel les points d'étranglement (4) sont disposés en série et lequel présente une section de liaison (6) respectivement entre deux points d'étranglement voisins (4), au moins deux vannes tout ou rien (3) étant reliées côté entrée à l'entrée de gaz (1) et au moins une vanne tout ou rien (3) aboutissant côté sortie dans une section de liaison (6) du trajet d'étranglement (5), **caractérisée en ce que** le trajet d'étranglement (5) présente plusieurs, de préférence au moins quatre points d'étranglement (4), **en ce que** le trajet d'étranglement (5) présente une section de liaison (6) respectivement entre deux points d'étranglement voisins (4), et **en ce qu'**une vanne tout ou rien (3) aboutit dans chacune des sections de liaison (6).

2. Unité de vannes à gaz selon la revendication 1, **caractérisée en ce que** le trajet d'étranglement (5), en amont du premier point d'étranglement (4.1), - en vue dans le sens d'écoulement du gaz -, présente une section d'entrée (7), et **en ce qu'**une vanne tout ou rien (3.1) est reliée côté entrée à l'entrée de gaz (1) et aboutit côté sortie dans la section d'entrée (7) du trajet d'étranglement (5).

3. Unité de vannes à gaz selon la revendication 1 ou 2, **caractérisée en ce que** les points d'étranglement (4) - en vue dans le sens d'écoulement du gaz - présentent une section d'écoulement croissante.

4. Unité de vannes à gaz selon l'une quelconque des revendications 1 à 3, **caractérisée en ce que** chaque point d'étranglement (4) est constitué d'au moins un étrangleur individuel qui est réalisé de préférence comme ouverture d'étranglement (18) ayant une section d'écoulement définie.

5. Unité de vannes à gaz selon l'une quelconque des revendications 1 à 4, **caractérisée en ce que** chaque point d'étranglement (4) est exactement constitué de deux étrangleurs individuels disposés l'un derrière l'autre.

6. Unité de vannes à gaz selon l'une quelconque des revendications 1 à 5, **caractérisée en ce que** le débit volumétrique de gaz traversant l'unité de vannes à gaz est égal à zéro lorsque toutes les vannes tout ou rien (3) sont fermées.

7. Unité de vannes à gaz selon l'une quelconque des revendications 1 à 6, **caractérisée en ce que** le débit volumétrique de gaz traversant l'unité de vannes à gaz est réglé sur une valeur minimale à laquelle un brûleur à gaz attribué à l'unité de vannes à gaz fonctionne avec une puissance minimale lorsque uniquement la vanne tout ou rien (3.1) aboutissant dans la section d'entrée (7) du trajet d'étranglement (5) est ouverte.

8. Unité de vannes à gaz selon l'une quelconque des revendications 1 à 7, **caractérisée en ce que** le débit volumétrique de gaz traversant l'unité de vannes à gaz est réglé sur une valeur maximale à laquelle un brûleur à gaz attribué à l'unité de vannes à gaz fonctionne avec une puissance maximale lorsqu'au moins la dernière vanne tout ou rien (3.5) aboutissant dans la dernière section de liaison (6.4) du trajet d'étranglement (5) - en vue dans le sens d'écoulement du gaz -est ouverte.

9. Unité de vannes à gaz selon l'une quelconque des revendications 1 à 8, **caractérisée en ce que** le débit volumétrique de gaz traversant l'unité de vannes à gaz est réglé sur une valeur intermédiaire à laquelle un brûleur à gaz attribué à l'unité de vannes à gaz fonctionne avec une puissance comprise entre la puissance minimale et la puissance maximale lorsqu'au moins une des vannes tout ou rien (3.2, 3.3, 3.4) est ouverte, laquelle aboutit dans une section de liaison centrale (6.1, 6.2, 6.3) qui est disposée entre la section d'entrée (7) et la dernière section de liaison (6.4), et **en ce qu'**au moins les vannes tout ou rien (3) qui aboutissent dans une section de liaison (6) en aval de la section de liaison centrale (6.1, 6.2, 6.3) sont fermées.

10. Unité de vannes à gaz selon l'une quelconque des revendications 1 à 9, **caractérisée en ce qu'**un mécanisme de commande est ménagé pour les vannes tout ou rien (3), lequel est réalisé de manière à ce que soit toutes les vannes tout ou rien (3) soient fermées soit à ce qu'exactement une vanne tout ou rien (3) soit ouverte ou qu'exactement deux vannes tout ou rien (3) soient ouvertes, lesquelles sont reliées à deux sections de liaison voisines (6) ou à la section d'entrée (7) et à la section de liaison voisine (6.1).

11. Unité de vannes à gaz selon l'une quelconque des revendications 1 à 10, **caractérisée en ce que** les vannes tout ou rien (3) sont actionnables au moyen d'un aimant permanent (8).

12. Unité de vannes à gaz selon l'une quelconque des revendications 1 à 11, **caractérisée en ce que** chaque vanne tout ou rien (3) présente un corps de fermeture déplaçable (10) qui, lorsque la vanne tout ou rien (3) est fermée, est adjacent à un siège de soupape et obture ainsi une ouverture de soupape (12a) dans le siège de soupape.

13. Unité de vannes à gaz selon la revendication 12, **caractérisée en ce qu'**un ressort (11) est ménagé, qui, lorsque la vanne tout ou rien (3) est fermée, appuie le corps de fermeture (10) sur le siège de soupape et **en ce que** pour ouvrir la vanne tout ou rien (3), le corps de fermeture (10) peut être soulevé du siège de soupape au moyen de la force d'un aimant permanent (8).

14. Unité de vannes à gaz selon la revendication 13, **caractérisée en ce que** pour commander la vanne tout ou rien (3), la position de l'aimant permanent (8) est modifiable par rapport au corps de fermeture (10) de la vanne tout ou rien (3).

15. Unité de vannes à gaz selon l'une quelconque des revendications 1 à 14, **caractérisée en ce que** - partant d'une position de fermeture, dans laquelle toutes les vannes tout ou rien (3) sont fermées - lors de l'ouverture de l'unité de vannes à gaz, d'abord la dernière vanne tout ou rien (3.5) aboutissant dans la dernière section de liaison (6.4) du trajet d'étranglement (5) - en vue dans le sens d'écoulement du gaz - est ouverte.
